# EUROPÄISCHE PATENTSCHRIFT

(11) **EP 0 943 483 B1**
(45) Veröffentlichungstag und Bekanntmachung des Hinweises auf die Patenterteilung: **08.12.2004**
(21) Anmeldenummer: 99104729.1
(22) Anmeldetag: 10.03.1999
(51) Int. Cl.: B60N 2/00, B60N 2/02, B60N 2/20, B60N 2/46

(54) **Sitzanordnung mit zumindest zwei nebeneinander angeordneten Sitzen einer Sitzreihe eines Kraftfahrzeuges**
Arrangement of at least two adjacent seats of a row of seats in an automotive vehicle
Agencement d'au moins deux sièges adjacents d'une rangée de sièges d'un véhicule automobile

(30) Priorität: 20.03.1998 DE 19812137
(43) Veröffentlichungstag der Anmeldung: 22.09.1999
(73) Patentinhaber: ADAM OPEL AG, 65423 Rüsselsheim (DE); Bertrand Faure Sitztechnik GmbH & Co. KG, D-31655 Stadthagen (DE); Dr.Ing. h.c. F. Porsche Aktiengesellschaft, 71287 Weissach (DE)
(72) Erfinder: Pache, Hans-Jürgen, 65468 Trebur (DE); Ehrhard, Winfried, Dipl.-Ing.(FH), 64839 Münster (DE); Hagemann, Rainer, Dipl.-Ing.(FH), 21398 Neetze (DE); Möllmann, Eduard, Dipl.-Ing.(FH), 89077 Ulm (DE); Adamski, Pawel, Dipl.-Ing., 71069 Sindelfingen (DE); Plate, Horst, Dipl.-Ing., 71735 Eberdingen (DE); Zarske, Rocco, Dipl.-Ing., 10437 Berlin (DE)
(74) Vertreter: Daniel, Ulrich W.P.

(56) Entgegenhaltungen:
- EP-A- 0 604 375
- EP-A- 0 626 291
- EP-A- 0 670 241
- EP-A- 0 713 800
- DE-A- 4 126 518
- US-A- 3 893 729

## Beschreibung

Die Erfindung betrifft eine Sitzanordnung mit zumindest zwei nebeneinander angeordneten Sitzen gemäß dem Oberbegriff des Patentanspruches 1.

Es ist bei Sitzanordnungen, insbesondere für Kraftfahrzeuge, allgemein bekannt, die einzelnen Sitze bzw. Teile davon multifunktionell zu nutzen. So ist beispielsweise in der DE 41 26 518 A1 ein Fahrzeugsitz beschrieben, dessen Rückenlehne ein nach oben wegstehendes Verlängerungsteil aufweist. Dieses Verlängerungsteil kann aus der etwa vertikalen Normalstellung in eine etwa waagerechte, von der Rückenlehne nach hinten wegstehende Position überführt werden, in der es als Armlehne dienen kann. Eine derartige Armlehne kann aber nur von einer in einer nach rückwärts gerichteten Position befindlichen Person als Armlehne benutzt werden.

Aus der EP 0 604 375 B1 ist eine gattungsnahe Sitzanordnung für Kraftfahrzeuge bekannt geworden. Die dort diskutierte Kraftfahrzeug-Rücksitzbank besteht aus einer einstückigen Sitzfläche, die sich über die Breite des Fahrzeugfonds erstreckt und zwei zugeordnete Rücksitzlehnenabschnitte aufweist, die in deren mittleren Bereich eine herausklappbare Armstütze enthalten. Diese herausklappbare Armstütze ist seitlich in den beiden Rücksitzlehnenabschnitten angelenkt. Mit der herausklappbaren Armstütze soll der Sitzkomfort von zwei auf der Rücksitzbank befindlichen Personen derart erhöht werden, dass diese auf der Armlehne ihre Arme abstützen können.

Die Armlehne kann in die Rücklehne zurückgeklappt werden, so dass dann eine durchgängig geschlossene Rücksitzlehne zur Verfügung steht mit drei Kopfstützen, so dass insgesamt drei, wenngleich deutlich beengtere Sitzplätze angeboten werden können.

Eine weitere Rücksitzbank ist in der EP 0 713 800 B1 diskutiert. Auch dort ist eine Armstütze aus der Rücksitzlehne heraus klappbar. Die in der EP 0 713 800 B1 diskutierte Armstütze verfügt ebenfalls über ein drittes kopfstützenartiges Element, welches sich seiner Kontur nach an die Kontur der benachbarten, kopfstützähnlichen Elemente der Rücksitzlehnenabschnitte links und rechts von der Mitte anschmiegt.

Die US-Patentschrift Nr. 3,893,729 offenbart eine gattungsfremde Flugzeugsitzreihe. Dort können die beiden äußeren Sitze relativ zu einander seitlich verschoben und der dazwischen entstehende freie Raum durch Einsetzen separater Sitzflächenteile und Rückenlehnenteile zu einer breiteren Sitzbank umgestaltet werden. Alternativ kann der dazwischen entstehende Freiraum zur Aufnahme von schmalen Sitzflächenelementen und eines zusätzlichen Armstützelementes genützt werden, so dass anstelle vorher zwei schmaler dann zwei breite Fluggastsitze mit einer mittleren breiten Armlehne verfügbar sind.

Schließlich offenbart die EP 0 670 241 B1 wiederum eine herkömmliche Kraftfahrzeug-Rücksitzbank für zwei Personen mit durchgängiger Sitzfläche und durchgängiger Rückenlehne, wobei zwischen den beiden Personen soviel Restfläche verbleibt, dass im Bedarfsfalle eine dritte Person Platz nehmen kann. Um den Komfort der beiden äußeren Sitzbereiche dieser Rücksitzbank zu erhöhen, kann aus dem mittleren Teil der Rückenlehne eine dort integrierte Armlehne herausgeklappt werden, so dass die beiden außen sitzenden Personen den mittleren Sitzflächenbereich der Rückenlehne der Rücksitzbank zum Abstützen ihrer Arme auf der herausgeklappten Armlehne nützen können.

Der Erfindung liegt ausgehend von der EP 0 604 375 B1 die Aufgabe zugrunde, für eine Kraftfahrzeug-Sitzanordnung der eingangs genannten Art eine Armlehne zu schaffen, die auf einfache Weise aus der Rückenlehne eines Sitzes, unter Schaffung von zusätzlichem Freiraum, insbesondere im Kopfbereich, für zumindest eine auf einem benachbarten Sitz befindliche Person gebildet wird, ohne dass dafür zusätzliche Teile benötigt werden.

Diese Aufgabe wird erfindungsgemäß dadurch gelöst, dass die in der etwa waagerechten Position befindliche Rückenlehne zur Bildung einer Armlehne für den benachbarten Sitz zumindest ein in der Höhe verstellbäres und/oder schwenkbares Polsterteil aufweist, wobei das Polsterteil um eine etwa waagerechte, in Sitzrichtung F orientierte Achse an der Rückenlehne oder Teilen davon angelenkt und durch Verschwenkung um diese Achse in die Armlehnen-Position überführbar ist. Vorteilhafte Weiterbildungen der Erfindung sind in den Unteransprüchen angegeben.

Durch eine derartige Ausbildung der Rückenlehne kann mit wenigen Handgriffen eine relativ große und komfortable Armlehne gebildet werden. Dazu muß lediglich die Rückenlehne in eine waagerechte Position und das an der Rückenlehne verstellbar gehaltene Polsterteil in eine Armlehnen-Position überführt werden.

Einige Ausführungsbeispiele der Erfindung sind nachstehend anhand von Zeichnungen näher beschrieben. Es zeigen
- Fig. 1:: eine Sitzanordnung eines Kraftfahrzeuges mit drei nebeneinander angeordneten Sitzen in perspektivischer Ansicht, wobei aus dem mittleren Sitz eine Armlehne für die beiden äußeren Sitze gebildet ist;
- Fig. 2:: eine Ansicht des mittleren Sitzes nach Fig. 1 in einer Nichtgebrauchslage, ohne der die Einzelteile des Sitzes umhüllenden Polsterung;
- Fig. 3:: eine Ansicht gemäß Fig. 2, jedoch mit einer in der Normalstellung befindlichen Rückenlehne;
- Fig. 4:: eine perspektivische Ansicht der Tragkonstruktion der Armlehne;
- Fig. 5:: eine Ansicht gemäß Pfeil **X** in Fig. 2, wobei die Tragelemente der Polsterteile sich in einer nach oben geschwenkten Armlehnen-Position befinden;
- Fig. 6:: eine alternative Ausbildung eines Sitzes mit einer in eine Armlehne umwandelbaren Rückenlehne;
- Fig. 7:: eine weitere alternative Ausbildung eines Sitzes, bei dem die Rückenlehne aus zwei in eine Armlehnen-Position schwenkbaren Polsterteilen besteht.

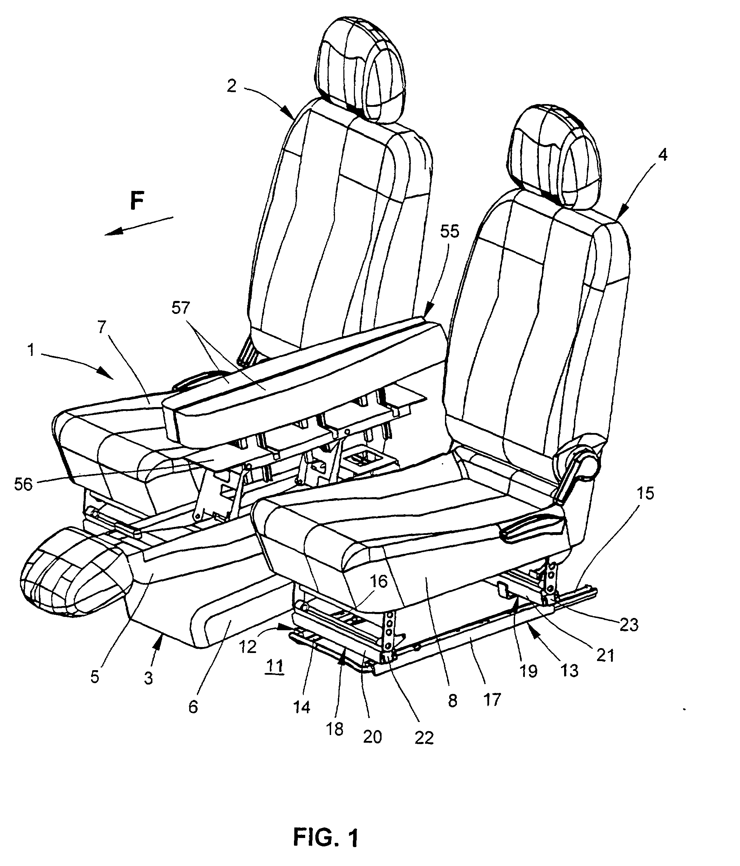

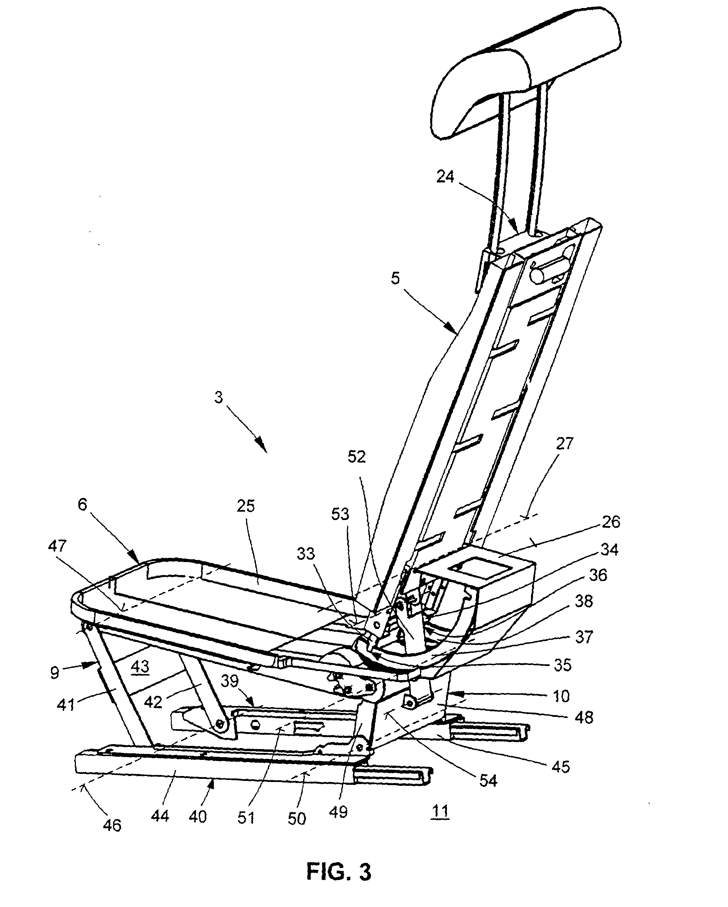

Fig. 1 zeigt eine Sitzreihe 1 eines nicht dargestellten Kraftfahrzeuges, welche drei nebeneinander angeordnete Sitze 2, 3, 4 aufweist, wobei der mittlere Sitz 3 in eine zwischen den beiden äußeren Sitzen 2, 4 befindliche Nichtgebrauchslage überführt ist. In dieser Nichtgebrauchslage befindet sich die Rückenlehne 5 des mittleren Sitzes 3 in einer etwa waagerechten Position, während sich das mit der Rückenlehne 5 scharnierartig verbundene Sitzteil 6 in einer abgesenkten Stellung unterhalb der Sitzteile 7, 8 der äußeren Sitze 2, 4 befindet. Für eine derartige Überführung des mittleren Sitzes 3 in die Nichtgebrauchslage ist das Sitzteil 6 im vorderen und im hinteren Bereichen über Schwenkstützen 9, 10 (in Fig. 3 dargestellt) mit dem Boden 11 verbunden, wobei die hintere Schwenkstütze 10 auf eine noch zu erläuternde Weise derart mit der Rückenlehne 5 verbunden ist, daß beim Vorklappen der Rückenlehne 5 gleichzeitig die Verstellung des Sitzteils 6 in die in Fig. 1 dargestellte Stellung erfolgt.

Die beiden äußeren Sitze 2, 4 sind sowohl längs- als auch querverschieblich mit dem Boden 11 verbunden. Dazu sind am jeweiligen äußeren Sitz 2, 4 im Bereich des Bodens 11 Schienenpaare 12, 13 vorgesehen, die in Sitzrichtung **F** orientiert sind und jeweils eine mit dem Boden 11 verbundene Unterschiene 14, 15 sowie eine auf der Unterschiene 14, 15 verschiebbar geführte Oberschiene 16, 17 aufweisen. Die Oberschienen 16, 17 können dabei mittels an sich bekannter Vorrichtungen in verschiedenen Stellungen verriegelt werden. Auf den Oberschienen 16, 17 sind zur Verstellung des Sitzes 2, 4 quer zur Sitzrichtung **F** weitere Schienenpaare 18, 19 angeordnet, welche quer zur Sitzrichtung **F** ausgerichtet sind und die jeweiligen Oberschienen 16, 17 der in Sitzrichtung **F** orientierten Schienenpaare 12, 13 am vorderen sowie am hinteren Ende miteinander verbinden. Die quer zur Sitzrichtung **F** orientierten Schienenpaare 18, 19 bestehen aus jeweils einer mit den Oberschienen 16, 17 verbundenen Führungsschiene 20, 21 und einer auf dieser verschiebbar gelagerten und mit dem Sitzteil 2, 4 verbundenen Sitzschiene 22, 23, welche analog der Oberschiene 16, 17 in verschiedenen Stellungen verriegelbar ausgebildet ist.

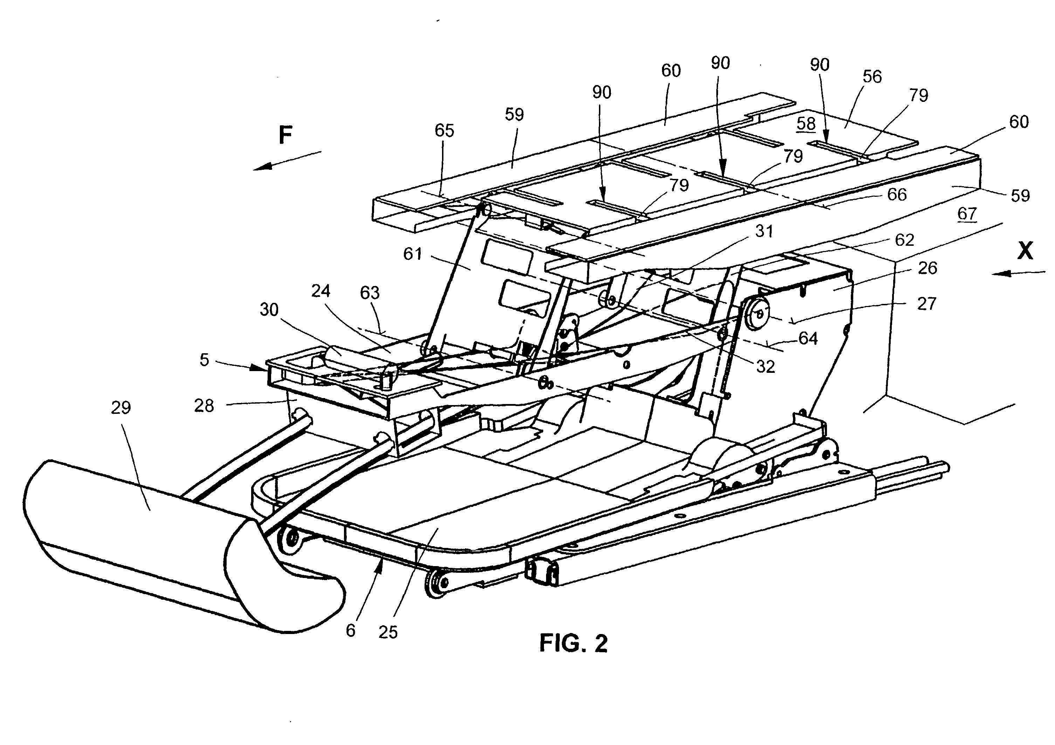

Die Einzelheiten des mittleren Sitzes 3 sind insbesondere aus Fig. 2 ersichtlich, in welcher der Rohbau dieses Sitzes 3 in einer solchen Stellung dargestellt ist, bei der sich eine Tragstruktur 24 der Rückenlehne 5 in einer etwa waagerechten Position und eine tragende Sitzschale 25 des Sitzteils 6 in einer nach unten abgesenkten Position befinden. Zum Überführen der Tragstruktur 24 aus der etwa vertikalen in die etwa waagerechte Position ist am hinteren Bereich der Sitzschale 25 eine sich nach oben erstreckende kastenförmige Halterung 26 vorgesehen, an der die Tragstruktur 24 um eine quer zur Sitzrichtung **F** orientierte Schwenkachse 27 angelenkt ist. Die Tragstruktur 24 ist dabei als ein profiliertes Blechteil mit örtlichen Versteifungen sowie Aufnahmen 28 für eine in der Höhe verstellbare Kopfstütze 29 ausgebildet. Im vorderen Bereich der Tragstruktur 24 ist ein Schieber 30 zur Entriegelung der Rückenlehne 5 in der jeweiligen Position vorgesehen. Dieser Schieber 30 ist durch Seilzüge 31, 32 kraftübertragend mit zwei - wie in Fig. 3 dargestellt - im unteren Bereich der Tragstruktur 24 beabstandet zueinander angeordneten und federnd gelagerten Raststiften 33, 34 verbunden. In der etwa vertikalen bzw. der etwa waagerechten Position der Rückenlehne 5 greifen die federbelasteten Raststifte 33, 34 selbsttätig in Ausnehmungen 35, 36 ein, die in jeweils einem kreisförmigen Segmentteil 37, 38 der kastenförmigen Halterung 26 angeordnet sind. Auf diese Weise kann die Rückenlehne 5 und somit auch der gesamte Sitz 3 in der jeweiligen Position sicher und komfortabel entriegelt bzw. verriegelt werden.

Aus Fig. 3 ist weiterhin ersichtlich, daß der Sitz 3 in Sitzrichtung **F** verstellbar mit dem Boden 11 verbunden ist. Diese Verstellung ist analog der Verstellung der äußeren Sitze 2, 4 ausgebildet, wobei die beabstandet zueinander angeordneten Schienenpaare 39, 40 über die vordere Schwenkstütze 9 und die hintere Schwenkstütze 10 mit der Sitzschale 25 verbunden sind. Die vordere Schwenkstütze 9 besteht dabei aus zwei parallel zueinander angeordneten Schwenkhebeln 41, 42, die in Querrichtung durch eine Verbindungsstrebe 43 miteinander verbunden sind. Diese Schwenkhebel 41, 42 sind am unteren Ende mit den Oberschienen 44, 45 um eine quer zur Sitzrichtung **F** angeordnete Achse 46 und am oberen Ende um eine parallel zu der am unteren Ende angeordneten Achse 46 verlaufende Achse 47 an der Sitzschale 25 angelenkt. Die hintere Schwenkstütze 10, welche im Vergleich zu der vorderen Schwenkstütze 9 einer höheren Belastung ausgesetzt ist, besteht im wesentlichen aus einem plattenförmigen Blechteil 48 mit rechtwinklig abgestellten Seiten 49 und ist am unteren Ende um eine quer zur Sitzrichtung **F** orientierte Achse 50 mit den Oberschienen 44, 45 und am oberen Ende um eine parallel zu der am unteren Ende angeordneten Achse 50 verlaufende Achse 51 mit der Sitzschale 25 verbunden. Durch eine derartige Anordnung der Schwenkstützen 9, 10 kann die Sitzschale 25 bzw. der komplette Sitz 3 bei der Überführung in die Nichtgebrauchslage in eine weiter vorn und unten befindliche Stellung geschwenkt werden.

Um die Überführung des Sitzes 3 in eine solche Nichtgebrauchslage zu vereinfachen ist die Rückenlehne 5 über ein schwenkbewegliches Koppelelement 52 derart mit dem Sitzteil 6 verbunden, daß beim Schwenken der Rückenlehne 5 um ihre Schwenkachse 27 eine zwangsweise Verstellung des Sitzteils 6 in die weiter vorn und unten befindliche Stellung bewirkt wird. Dazu ist das Koppelelement 52 mit seinem oberen Ende um eine parallel und beabstandet zu der Schwenkachse 27 der Rückenlehne 5 angeordnete Drehachse 53 am unteren Bereich der Tragstruktur 24 angelenkt. Das untere Ende des Koppelelementes 52 ist um eine parallel zu der am oberen Ende angeordneten Drehachse 53 verlaufende Drehachse 54 an der hinteren Schwenkstütze 10 in der Nähe der oberen Achse 51 angelenkt. Diese Drehachsen 53, 54 sind räumlich und kinematisch in bezug auf die Schwenkachse 27 der Rückenlehne 5, die obere Achse 51 und die untere Achse 50 der hinteren Schwenkstütze 10 so gewählt, daß bei der Verschwenkung der Rückenlehne 5 um die Schwenkachse 27 gleichzeitig - bedingt durch die Koppelverbindung (Koppelelement 52) - eine Verschwenkung der Schwenkstütze 10 in gleiche Richtung um die untere Achse 50 stattfindet. Dabei ist der Drehwinkel der Rückenlehne 5 zwischen der etwa vertikalen und der etwa waagerechten Position derart auf den entsprechenden Drehwinkel der hinteren Schwenkstütze 10 abgestimmt, daß nach der Überführung der Rückenlehne 5 in die etwa waagerechte Position sich das Sitzteil 6 - wie in Fig. 2 dargestellt - in der abgesenkten Position befindet.

Zwischen den beiden äußeren Sitzen 2, 4 der Sitzreihe 1 kann bei Bedarf, wie in Fig. 1 gezeigt, aus der Rückenlehne 5 des in der Nichtgebrauchslage befindlichen mittleren Sitzes 3 eine Armlehne 55 gebildet werden. Dazu ist an der Rückenlehne 5 eine parallel zu sich in eine höhere, sogenannte Tisch-Position verstellbare Tragplatte 56 vorgesehen, an der zwei spiegelbildlich ausgebildete Polsterteile 57 schwenkbar angelenkt sind. Nach dem Verschwenken der beiden Polsterteile 57 nach oben und Verriegelung in der in Fig. 1 gezeigten Armlehnen-Position wird die relativ große und bequeme Armlehne 55 gebildet, welche sich - in Sitzrichtung **F** gesehen - praktisch über die gesamte Breite der Sitzreihe 1 erstreckt.

Der Aufbau und die Verbindung einer solchen Tragplatte 56 mit der Tragstruktur 24 der Rückenlehne 5 ist in Fig. 2 dargestellt. Dabei ist die etwa eine ebene Oberfläche 58 aufweisende Tragplatte 56 zusammen mit den daran angelenkten, etwa kastenförmigen Tragelementen 59 der Polsterteile 57 in die erhöhte Tisch-Position verlagert, in der die Oberseiten 60 der Tragelemente 59 und die Tragplatte 56 eine etwa waagerechte ebene Ablagefläche bilden. Für eine solche Verlagerung der Tragplatte 56 sind zwei etwa parallel und beabstandet zueinander angeordnete Schwingen 61, 62 vorgesehen, welche als plattenförmige Blechprägeteile ausgebildet sind. Diese Schwingen 61, 62 sind am jeweiligen unteren Ende über eine waagerecht und quer zur Sitzrichtung **F** gestellte Achse 63, 64 mit der Tragstruktur 24 der Rückenlehne 5 und am jeweiligen oberen Ende über eine parallel zu der am unteren Ende angeordneten Achse 63, 64 verlaufende Achse 65, 66 mit der Tragplatte 56 gelenkig verbunden. Bei der Rückverlagerung der Tragplatte 56 schwenken die Schwingen 61, 62 um die jeweiligen unteren Achsen 63, 64 und lenken somit die Tragplatte 56 in die an der Tragstruktur 24 vorgesehene, weiter vorn liegende Ruhestellung. In dieser Ruhestellung bildet die Tragplatte 56 zusammen mit den Tragelementen 59 auf der Rückseite der Rückenlehne 5 eine etwa waagerechte ebene Fläche, deren Höhe etwa der Höhe der hinter den Sitzen 2, 3, 4 befindlichen Laderaumfläche 67 entspricht.

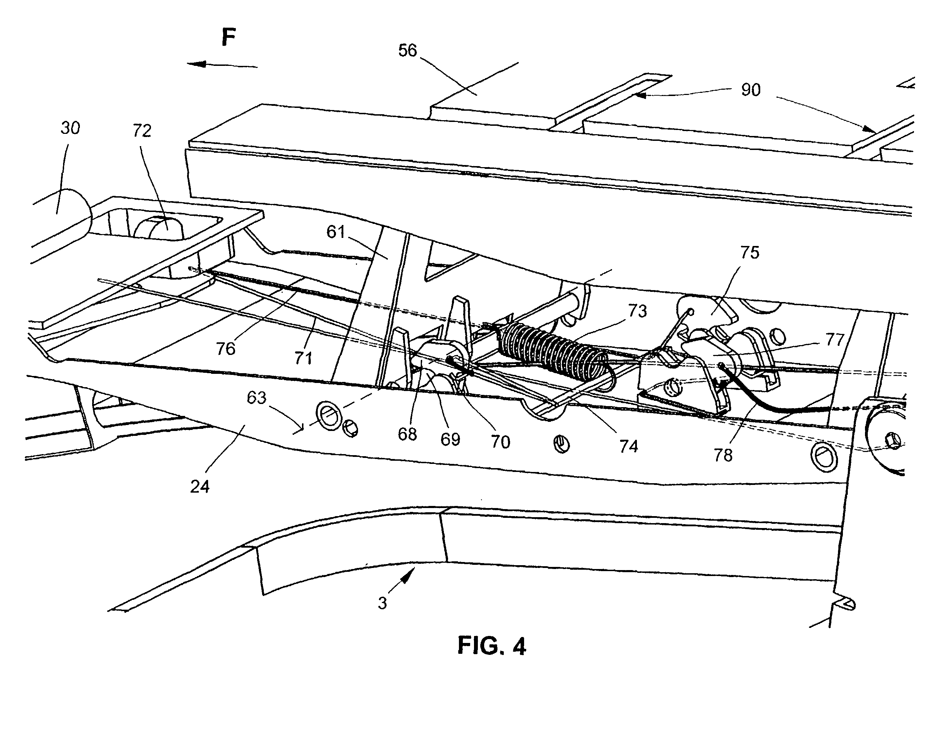

Die Tragplatte 56 ist sowohl in der Tisch-Position als auch in der Ruhestellung verriegelbar ausgebildet. Die Verriegelung in der Tisch-Position erfolgt - wie in Fig. 4 dargestellt - mittels einer an der Tragstruktur 24 drehbar gelagerten ersten Klinke 68, die in der dargestellten Position einen an der vorderen Schwinge 61 vorgesehenen Verriegelungsbolzen 69 übergreift. Der Verriegelungsbolzen 69 ist dabei in einem etwa rechten Winkel beabstandet zu der Achse 63 der vorderen Schwinge 61 angeordnet. Beim Schwenken der vorderen Schwinge 61 im Uhrzeigersinn bewegt sich somit auch der Verriegelungsbolzen 69 kreisförmig um die Achse 63 bis zur selbsttätigen Verriegelung durch die erste Klinke 68, welche in die kreisförmige Bahn des Verriegelungsbolzens 69 hineinragt und durch eine Schenkelfeder 70 nachgiebig in der Verriegelungsstellung gehalten ist. Zum Entriegeln des Verriegelungsbolzens 69 ist die erste Klinke 68 über einen ersten Seilzug 71 mit einer Schiebetaste 72 verbunden, die in der Nähe des Schiebers 30 zur Entriegelung der Rückenlehne 5 angeordnet ist. Bei Betätigung der Schiebetaste 72 wird die erste Klinke 68 aus der Verriegelungsstellung weggeschwenkt, so daß die Tragplatte 56 gegen die Kraft einer zwischen der Tragplatte 56 und der Tragstruktur 24 wirkenden Feder 73 zurück in die Ruhestellung überführt werden kann. Die einerseits an der vorderen Schwinge 61 und andererseits an einer Querstrebe 74 der Tragstruktur 24 angreifende Feder 73 ist dabei zur Unterstützung der Verstellung der Tragplatte 56 in die Tisch-Position vorgesehen.

Die Verriegelung der Tragplatte 56 in der Ruhestellung erfolgt auf ähnliche Weise wie die Verriegelung in der Tisch-Position. Bei der Überführung der Tragplatte 56 in die Ruhestellung verriegelt selbsttätig eine zweite, ebenfalls an der Tragstruktur 24 drehbar gelagerte und in Verriegelungsstellung federbelastete Klinke 75 einen an der Tragplatte 56 angeordneten zweiten Verriegelungsbolzen, welcher in der in Fig. 4 gezeigten Stellung der Tragplatte 56 nicht sichtbar ist. Zum Entriegeln dieses zweiten Verriegelungsbolzens ist die zweite Klinke 75 über einen zweiten Seilzug 76 mit der Schiebetaste 72 verbunden, welche somit die Tragplatte 56 sowohl in der Tisch-Position als auch in der Ruhestellung entriegeln kann.

Um eine unbeabsichtigte Entriegelung der Tragplatte 56 in der etwa vertikalen Position der Rückenlehne 5 zu verhindern, wird die Tragplatte 56 bzw. der zweite Verriegelungsbolzen von einer dritten Klinke 77 in der Ruhestellung gesichert. Die Verriegelung mittels der dritten Klinke 77 ist ähnlich der Verriegelung der Tragplatte 56 in der Ruhestellung ausgebildet, wobei ein die dritte Klinke 77 entriegelnde Seilzug 78 derart in die Sitzkinematik bei der Überführung des Sitzes 3 in die Nichtgebrauchslage eingebunden ist, daß erst in der etwa waagerechten Position der Rückenlehne 5 die dritte Klinke 77 den zweiten Verriegelungsbolzen freigibt. Eine solche Anordnung des dritten Seilzuges 78 ist in der Zeichnung nicht dargestellt, da diese für einen Fachmann geläufig ist.

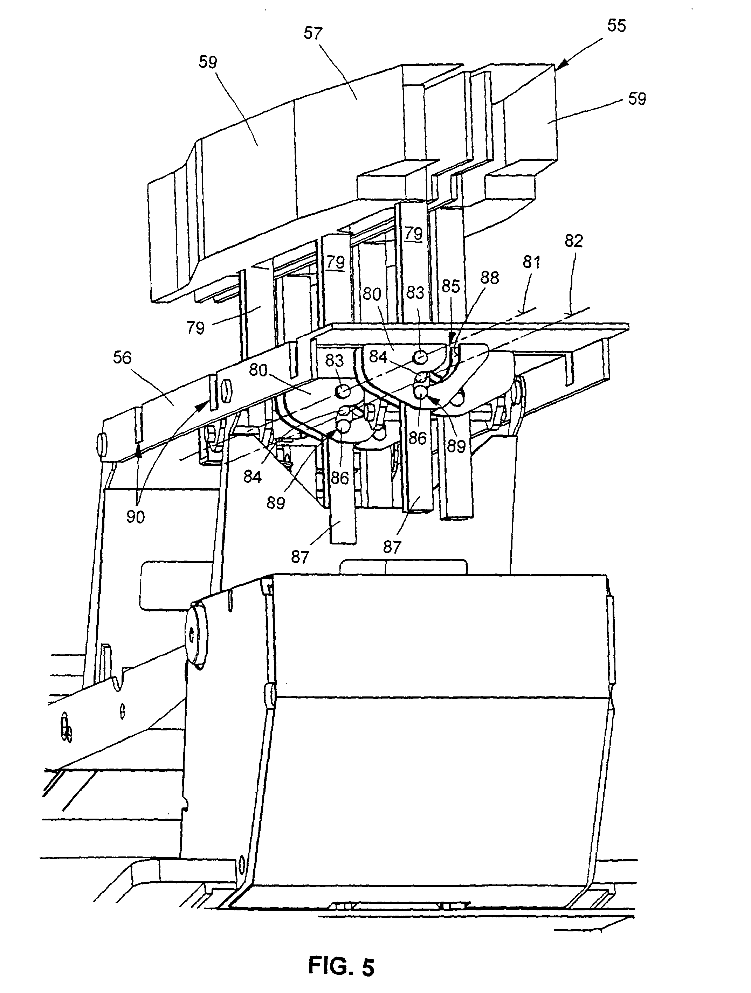

Zur Bildung der Armlehne 55 zwischen den beiden äußeren Sitzen 2, 4 müssen die Polsterteile 57 in die in Fig. 1 gezeigten Armlehnen-Position geschwenkt und in dieser Position verriegelt werden. In Fig. 5 ist ein solcher Aufbau der Armlehne 55 zur Verdeutlichung ohne der dazugehörigen Polsterung dargestellt. Wie daraus ersichtlich, sind die jeweiligen Tragelemente 59 der Armlehne 55 von drei Hebelarmen 79 gestützt, welche jeweils in einem an der Tragplatte 56 angeordneten Lagerbock 80 sowohl schwenkbar als auch geringfügig axial verschiebbar gelagert sind. Die Schwenkung der Tragelemente 59 erfolgt dabei um jeweils eine an der Tragplatte 56 angeordnete Achse 81, 82, die durch etwa parallel zur Sitzrichtung **F** ausgerichtete und fest mit dem jeweiligen Lagerbock 80 verbundene Lagerbolzen 83 gebildet ist. Die Lagerbolzen 83 durchsetzen jeweils ein an den Hebelarmen 79 vorgesehenes Langloch 84, das in Längsrichtung des Hebelarmes 79 ausgerichtet ist. An den Lagerböcken 80 sind weiterhin Kulissenführungen 85 für jeweils einen fest mit dem jeweiligen Hebelarm 79 verbundenen Führungsstift 86 vorgesehen, um eine selbsttätige Fixierung der Tragelemente 59 in der Armlehnen-Position zu erreichen.

Nachfolgend wird die Überführung der Tragelemente 59 der Polsterteile 57 in die Armlehnen-Position näher erläutert. In der Ausgangssituation befinden sich die Tragelemente 59 in der in Fig. 2 dargestellten Tisch-Position, in der die Hebelarme 79 etwa waagerecht ausgerichtet sind. In dieser Lage liegt der jeweilige vom Tragelement 59 abgewandte Abschnitt 87 (in Fig. 5 zu sehen) des Hebelarms 79 an der Unterseite der Tragplatte 56 an und fixiert somit die Tragelemente 59 in dieser Position. Zum Überführen der Tragelemente 59 in die Armlehnen-Position müssen diese um die jeweilige Achse 81, 82 nach oben geschwenkt werden. An der Tragplatte 56 sind dazu für jeden Hebelarm 79 querverlaufende Schlitze 90 ausgebildet, welche eine solche Verschwenkung der Hebelarme 79 und somit auch der Tragelemente 59 zwischen der Tisch-Position und der Armlehnen-Position ermöglichen. Während dieser Schwenkbewegung gleiten die Führungsstifte 86 derart entlang der kreisförmigen Abschnitte 88 der Kulissenführungen 85, daß gleichzeitig eine axiale Verschiebung der Hebelarme 79 entsprechend der axialen Ausdehnung der Langlöcher 84 erfolgt. Beim Erreichen der Armlehnen-Position rasten die Führungsstifte 86 in jeweils einer am Ende der Kulissenführungen 85 angeordnete Rastausnehmung 89 ein, die eine Rückverlagerung der Tragelemente 59 nach unten und dadurch eine Fixierung der jeweiligen Tragelemente 59 in der Armlehnen-Position ermöglicht.

Die in der Armlehnen-Position befindlichen Tragelemente 59 sind sehr einfach in die Tisch-Position zu überführen. Dazu müssen die Tragelemente 59 lediglich geringfügig angehoben werden, damit die Führungsstifte 86 der Hebelarme 79 außer Eingriff mit den entsprechenden Rastausnehmungen 89 kommen. Danach können die so entriegelte Tragelemente 59 bequem in die etwa waagerechte Tisch-Position geschwenkt werden.

Bei einer derartigen Ausbildung der Rückenlehne 5 des mittleren Sitzes 3 kann der Sitzkomfort auf den beiden äußeren Sitzen 2, 4 noch weiter gesteigert werden, in dem nach der Überführung der Polsterteile 57 in die Armlehnen-Position die äußeren Sitze 2, 4 quer zur Sitzrichtung **F** nach innen in den durch die Reduzierung der Breite der Rückenlehne 5 freigewordenen Raum verstellt werden. Es ergibt sich somit mehr Freiraum insbesondere im Kopfbereich für die in diesen Sitzen 2, 4 befindlichen. Personen.

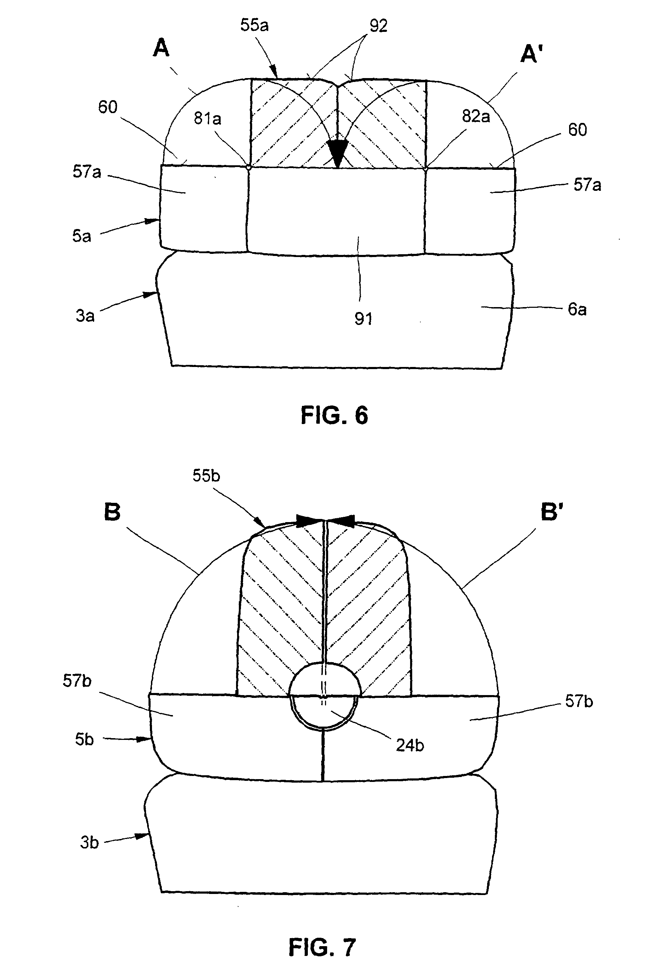

Eine alternative Ausführung eines Sitzes 3a mit einer relativ einfach in eine Armlehne 55a verwandelbaren Rückenlehne 5a ist in Fig. 6 dargestellt. Die Rückenlehne 5a ist dabei gegen das Sitzteil 6a vorgeklappt und bildet in dieser Position mit ihrer ebenen Rückfläche eine etwa waagerechte Ablagefläche. Die Rückenlehne 5a besteht aus einem tragenden Mittelteil 91, an dem zwei spiegelbildlich an dessen beiden Seiten angeordnete Polsterteile 57a um jeweils eine Achse 81a, 82a schwenkbar angelenkt sind. Diese Polsterteile 57a können durch Schwenken um etwa 180° gemäß dem jeweiligen Pfeil A, A' in die in Fig. 6 schraffiert dargestellte Armlehnen-Position überführt werden. In dieser Armlehnen-Position bilden die Polsterteile 57a mit ihren gepolsterten oberen Seiten 92 die Abstützfläche der Armlehne 55a. Bei dieser Ausführung werden die gepolsterten Seiten 92 der Polsterteile 57a sowohl zur Bildung der Abstützfläche der Armlehne 55a als auch zur Bildung der Abstützfläche der Rückenlehne 5a für die auf diesem Sitz 3a sitzende Person genutzt.

Bei einer weiteren alternativen Ausführung eines Sitzes 3b ist dessen Rückenlehne 5b - wie in Fig. 7 gezeigt - durch zwei spiegelbildlich zueinander angeordnete Polsterteile 57b gebildet, welche auf eine nicht näher dargestellte Weise an einer segmentförmigen Tragstruktur 24b schwenkbar gelagert sind. Diese Polsterteile 57b können durch Schwenken um etwa 90° gemäß dem jeweiligen Pfeil B, B' in die in Fig. 7 schraffiert dargestellte Armlehnen-Position überführt werden, wodurch eine komfortable Armlehne 55b gebildet wird. Diese Ausführung des Sitzes 5b ist ebenfalls einfach in der Handhabung und kann - wie auch die zuvor beschriebene Ausführung des Sitzes 3a - anstelle der mit Fig. 1 bis Fig. 5 beschriebenen Ausführung des Sitzes 3 in der Sitzreihe 1 verwendet werden.

## Patentansprüche

1. Sitzanordnung mit zumindest zwei nebeneinander angeordneten Sitzer einen Sitzreihe eines Kraftfahrzeuges, wobei zumindest ein Sitz eine Rückenlehne aufweist, die aus einer zum Aufnehmen einer Person geeigneten Normalstellung beim Vorklappen der Rückenlehne in eine etwa waagerechte Position überführbar ist, **dadurch gekennzeichnet, dass** die Rückenlehne (5; 5a; 5b) scharnierartig mit dem Sitzteil (6; 6a; 6b) verbunden ist, wobei die in der vorgeklappten, etwa waagerechten Position befindliche Rückenlehne (5; 5a; 5b) zur Bildung einer Armlehne (55; 55a; 55b) für den benachbarten Sitz (2, 4) zumindest ein in der Höhe verstellbares und/oder schwenkbares Polsterteil (57; 57a; 57b) aufweist, wobei das Polsterteil (57; 57a; 57b) um eine etwa waagerechte, in Sitzrichtung **F** orientierte Achse (81, 82; 81a, 82a) an der Rückenlehne (5; 5a; 5b) oder Teilen davon angelenkt und durch Verschwenkung um diese Achse (81, 82; 81a, 82a) in die Armlehnen-Position überführbar ist.

2. Sitzanordnung nach Anspruch 1, **dadurch gekennzeichnet, dass** das Polsterteil (57; 57a; 57b) in der Normalstellung der Rückenlehne (5; 5a; 5b) eine Rückenlehnen-Position und in der etwa waagerechten Position der Rückenlehne (5; 5a; 5b) eine Armlehnen-Position aufweist, wobei das Polsterteil (57; 57a; 57b) in der Rückenlehnen-Position zumindest teilweise eine Abstützfläche für den Rücken der auf dem Sitz sitzenden Person und in der Armlehnen-Position zumindest teilweise eine Abstützfläche der Armlehne (55; 55a; 55b) bildet.

3. Sitzanordnung nach Anspruch 1 oder 2, **dadurch gekennzeichnet, dass** das Polsterteil (57; 57a; 57b) aus der Armlehnen-Position in eine Tisch-Position überführbar ist, in der zumindest eine relativ stabile ebene Fläche (60) des Polsterteils (57; 57a; 57b) zumindest teilweise eine etwa waagerechte Ablagefläche bildet.

4. Sitzanordnung nach Anspruch 3, **dadurch gekennzeichnet, dass** die Rückenlehne (5; 5a; 5b) zwei spiegelbildlich angeordnete Polsterteile (57; 57a; 57b) aufweist, welche in der Tisch-Position zumindest teilweise eine ebene Rückfläche der Rückenlehne (5; 5a; 5b) und nach der Überführung in die jeweilige Armlehnen-Position die Abstützfläche der Armlehne (55; 55a; 55b) bilden.

5. Sitzanordnung nach einem der Ansprüche 1 bis 4, **dadurch gekennzeichnet, dass** die Rückenlehne (5; 5a; 5b) scharnierartig mit dem dazugehörigen Sitzteil (6; 6a) verbunden ist und daß die in etwa waagerechter Position befindliche Rückenlehne (5; 5a; 5b) ein mit dem Sitzteil gemeinsames Sitzpaket bildet, welches derart in der Höhe verstellbar ausgebildet ist, daß die rückwärtige ebene Fläche der Rückenlehne (5; 5a; 5b) in einer untersten Stellung des Sitzpaketes etwa in einer Ebene mit dem hinter dem Sitz (3; 3a; 3b) befindlichen Ladeboden (67) liegt.

6. Sitzanordnung nach einem der Ansprüche 1 bis 5, **dadurch gekennzeichnet, dass** die Rückfläche der Rückenlehne (5) zumindest teilweise durch eine Tragplatte (56) gebildet ist, an der zumindest ein Polsterteil (57) um die in Sitzrichtung F orientierte Achse (81, 82) schwenkbar angelenkt ist.

7. Sitzanordnung nach Anspruch 6, **dadurch gekennzeichnet, dass** die Tragplatte (56) verstellbar mit der Rückenlehne (5) verbunden ist, derart, dass in der etwa waagerechten Position der Rückenlehne (5) durch Verstellung der Tragplatte (56) in eine etwa parallel ausgerichtete höhere Stellung die Tisch-Position der Polsterteile (57) gebildet ist.

8. Sitzanordnung nach Anspruch 6 oder 7, **dadurch gekennzeichnet, dass** die Tragplatte (56) sowohl in ihrer an der Rückenlehne (5) befindlichen Ruhestellung als auch in der nach oben verstellten Tisch-Position zwangsverriegelt ist.

9. Sitzanordnung nach einem der Ansprüche 6 bis 8, **dadurch gekennzeichnet, dass** die Rückenlehne (5) eine mit dem dazugehörigen Sitzteil (6) scharnierartig verbundene Tragstruktur (24) aufweist und dass die Tragplatte (56) durch zumindest eine mit der Tragstruktur (24) schwenkbar verbundene Schwinge (61, 62) in die Tisch-Position verlagerbar ist.

10. Sitzanordnung nach Anspruch 9, **dadurch gekennzeichnet, dass** die Tragstruktur (24) eine vordere Schwinge (61) sowie eine hintere Schwinge (62) aufweist, die etwa parallel und beabstandet zueinander angeordnet und am jeweiligen unteren Ende über eine waagerecht und quer zur Sitzrichtung **F** gestellte Achse (63, 64) mit der Tragstruktur (24) der Rückenlehne (5) und am jeweiligen oberen Ende über eine parallel zu der am unteren Ende angeordneten Achse (63, 64) verlaufende Achse (65, 66) mit der Tragplatte (56) gelenkig verbunden sind.

11. Sitzanordnung nach einem der Ansprüche 1 bis 10, **dadurch gekennzeichnet, dass** das Polsterteil (57; 57a; 57b) in der Armlehnen-Position verriegelbar ausgebildet ist.

12. Sitzanordnung nach einem der Ansprüche 6 bis 11, **dadurch gekennzeichnet, dass** das Polsterteil (57) ein formstabiles Tragelement (59) sowie zumindest einen mit diesem verbundenen Hebelarm (79) aufweist, wobei der Hebelarm (79) in einem Lagerbock (80) der Tragplatte (56) zwischen der Tisch-Position und der Armlehnen-Position schwenkbar und in der jeweiligen Position fixierbar ausgebildet ist.

13. Sitzanordnung nach einem der Ansprüche 1 bis 12, **dadurch gekennzeichnet, dass** durch die Überführung der Polsterteile (57; 57a; 57b) in die Armlehnen-Position Freiraum zur Verstellung zumindest eines Sitzes (2, 4) der Sitzreihe (1) quer zur Sitzrichtung **F** gebildet ist.

## Claims

1. Seat arrangement with at least two seats arranged adjacent to each other in a row of seats of a motor vehicle, wherein at least one seat has a seat back which can be transferred from a normal position suitable for receiving a person to an approximately horizontal position upon folding the seat back forwards, **characterised in that** the seat back (5; 5a; 5b) is hinged to the seat portion (6; 6a; 6b), wherein the seat back (5; 5a; 5b) located in the folded-forwards, approximately horizontal position has at least one upholstery portion (57; 57a; 57b) adjustable in height and/or pivotable to form an arm rest (55; 55a; 55b) for the adjacent seat (2, 4), wherein the upholstery portion (57; 57a; 57b) is linked to the seat back (5; 5a; 5b) or parts thereof about an approximately horizontal axis (81, 82; 81a, 82a) oriented in the seat direction F and by pivoting about this axis (81, 82; 81a, 82a) can be transferred to the arm rest position.

2. Seat arrangement according to claim 1, **characterised in that** the upholstery portion (57; 57a; 57b) has a seat back position in the normal position of the seat back (5; 5a; 5b) and an arm rest position in the approximately horizontal position of the seat back (5; 5a; 5b), wherein the upholstery portion (57; 57a; 57b) at least partially forms a supporting surface for the back of the person sitting on the seat in the seat back position and at least partially forms a supporting surface of the arm rest (55; 55a; 55b) in the arm rest position.

3. Seat arrangement according to claim 1 or 2, **characterised in that** the upholstery portion (57; 57a; 57b) can be transferred from the arm rest position to a table position in which at least one relatively stable planar surface of the upholstery portion (57; 57a; 57b) at least partially forms an approximately horizontal shelf surface.

4. Seat arrangement according to claim 3, **characterised in that** the seat back (5; 5a; 5b) has two inversely symmetrically arranged upholstery portions (57; 57a; 57b) which in the table position at least partially form a planar back surface of the seat back (5; 5a; 5b) and after transfer to the respective arm rest position form the supporting surface of the arm rest (55; 55a; 55b).

5. Seat arrangement according to any of claims 1 to 4, **characterised in that** the seat back (5; 5a; 5b) is hinged to the associated seat portion (6; 6a) and **in that** the seat back (5; 5a; 5b) located in the approximately horizontal position forms a seat assembly which is together with the seat portion and which is made adjustable in height in such a way that the rear planar surface of the seat back (5; 5a; 5b) in a lowermost position of the seat assembly lies approximately in the same plane as the loading floor (67) located behind the seat (3; 3a; 3b).

6. Seat arrangement according to any of claims 1 to 5, **characterised in that** the back surface of the seat back (5) is at least partially formed by a supporting plate (56) to which at least one upholstery portion (57) is linked so as to be pivotable about the axis (81, 82) oriented in the seat direction F.

7. Seat arrangement according to claim 6, **characterised in that** the supporting plate (56) is adjustably connected to the seat back (5) in such a way that in the approximately horizontal position of the seat back (5) the table position of the upholstery portions (57) is formed by adjustment of the supporting plate (56) to an approximately parallel-oriented higher position.

8. Seat arrangement according to claim 6 or 7, **characterised in that** the supporting plate (56) is positively locked both in its rest position located on the seat back (5) and in the upwardly adjusted table position.

9. Seat arrangement according to any of claims 6 to 8, **characterised in that** the seat back (5) has a supporting structure (24) hinged to the associated seat portion (6) and **in that** the supporting plate (56) is displaceable into the table position by at least one link (61, 62) pivotably connected to the supporting structure (24).

10. Seat arrangement according to claim 9, **characterised in that** the supporting structure (24) has a front link (61) and a rear link (62) which are arranged approximately parallel to and spaced apart from each other, and pivotably connected to the supporting structure (24) of the seat back (5) at the respective lower end by an axis (63, 64) placed horizontally and transversely to the seat direction F, and to the supporting plate (56) at the respective upper end by an axis (65, 66) running parallel to the axis (63, 64) arranged at the lower end.

11. Seat arrangement according to any of claims 1 to 10, **characterised in that** the upholstery portion (57; 57a; 57b) is designed so that it can be locked in the arm rest position.

12. Seat arrangement according to any of claims 6 to 11, **characterised in that** the upholstery portion (57) has a dimensionally stable supporting element (59) and at least one lever arm (79) connected to the latter, wherein the lever arm (79) is formed in a bearing block (80) of the supporting plate (56) so that it can be pivoted between the table position and the arm rest position and fixed in the respective position.

13. Seat arrangement according to any of claims 1 to 12, **characterised in that**, by transfer of the upholstery portions (57; 57a; 57b) to the arm rest position, free space is formed for the adjustment of at least one seat (2, 4) of the row of seats (1) transversely to the seat direction F.

## Revendications

1. Agencement de sièges avec au moins deux sièges adjacents d'une rangée de siège de véhicule automobile, dont au moins un siège présente un dossier, qui peut passer, lors du rabattement vers l'avant du dossier, d'une position normale appropriée pour la réception d'une personne, à une position sensiblement horizontale, **caractérisé en ce que** le dossier (5 ; 5a ; 5b) est relié de façon articulée à la partie de siège (6 ; 6a ; 6b), et dont le dossier (5 ; 5a ; 5b) se trouvant en position sensiblement horizontale, rabattu vers l'avant, présente pour la formation d'un accoudoir (55 ; 55a ; 55b) pour le siège voisin (2, 4) au moins une partie de rembourrage (57 ; 57a ; 57b) réglable en hauteur et/ou pivotante, dans lequel la partie de rembourrage (57 ; 57a ; 57b) s'articule sur le dossier (5 ; 5a ; 5b) ou sur des parties de celui-ci, sur un axe (81 ; 82 ; 81a ; 82a) sensiblement horizontal, orienté dans la direction des sièges F et peut passer par pivotement sur cet axe (81, 82 ; 81a, 82a) en position d'accoudoir.

2. Agencement de sièges selon la revendication 1, **caractérisé en ce que** la partie de rembourrage (57 ; 57a ; 57b) présente dans la position normale du dossier (5 ; 5a ; 5b), une position de dossier et dans la position sensiblement horizontale du dossier (5 ; 5a ; 5b), une position d'accoudoir, et dont la partie de rembourrage (57 ; 57a ; 57b) forme, en position de dossier, au moins partiellement une surface de support pour le dos de la personne assise sur le siège et en position d'accoudoir, au moins partiellement une surface de support d'accoudoir (55 ; 55a ; 55b).

3. Agencement de sièges selon la revendication 1 ou 2, **caractérisé en ce que** la partie de rembourrage (57 ; 57a ; 57b) peut passer de la position d'accoudoir à la position de table dans laquelle au moins une surface (60) plane relativement stable de la partie de rembourrage (57 ; 57a ; 57b) forme au moins partiellement une surface de dépose sensiblement horizontale.

4. Agencement de sièges selon la revendication 3, **caractérisé en ce que** le dossier (5 ; 5a ; 5b) présente deux parties de rembourrage (57 ; 57a ; 57b) disposées en regard, et formant, en position de table, au moins partiellement une surface arrière plane du dossier (5 ; 5a ; 5b) et formant, après le passage en position d'accoudoir respective, la surface de support de l'accoudoir (55 ; 55a ; 55b).

5. Agencement de sièges selon l'une des revendications 1 à 4, **caractérisé en ce que** le dossier (5 ; 5a ; 5b) est relié de façon articulée à la partie de siège correspondante (6, 6a) et que le dossier (5 ; 5a ; 5b) se trouvant en position sensiblement horizontale forme avec la partie de siège un ensemble de sièges, réglable en hauteur, de telle sorte que la surface plane arrière du dossier (5 ; 5a ; 5b) se situe, dans la position abaissée de l'ensemble de sièges, sensiblement dans le même plan que le plancher de chargement (67) se trouvant derrière le siège (3 ; 3a ; 3b).

6. Agencement de sièges selon l'une des revendications 1 à 5, **caractérisé en ce que** la surface arrière du dossier (5) est formée au moins partiellement d'une plaque de support (56), sur laquelle au moins une partie de rembourrage (57) est articulée sur un axe (81, 82) orienté dans la direction des sièges F.

7. Agencement de sièges selon la revendication 6, **caractérisé en ce que** la plaque de support (56) est reliée de façon réglable au dossier (5), de telle sorte que la position de table de la partie de rembourrage (57) soit formée dans la position sensiblement horizontale du dossier (5) par le placement de la plaque de support (56) dans une position plus élevée et sensiblement parallèle.

8. Agencement de sièges selon la revendication 6 ou 7, **caractérisé en ce que** la plaque de support (56) est verrouillée de façon obligatoire aussi bien en position de repos au niveau du dossier (5) que dans la position de table placée vers le haut.

9. Agencement de sièges selon l'une des revendications 6 à 8, **caractérisé en ce que** le dossier (5) présente une structure de support (24) articulée sur la partie de siège (6) correspondante et dont la plaque de support (56) est déplaçable en position de table au moyen d'au moins un balancier (61, 62) pivotant sur la structure de support (24).

10. Agencement de sièges selon la revendication 9, **caractérisé en ce que** la structure de support (24) présente un balancier avant (61) et un balancier arrière (62) placés de façon sensiblement parallèle et à distance, et est reliée souplement à l'extrémité inférieure respective par un axe (63, 64) placé horizontalement et perpendiculairement à la direction des sièges F, à la structure de support (24) du dossier (5), et à l'extrémité supérieure respective, par un axe longeant (65, 66) parallèle à l'axe (63, 64) disposé à l'extrémité inférieure, à la plaque de support (56).

11. Agencement de sièges selon l'une des revendications 1 à 10, **caractérisé en ce que** la partie de rembourrage (57 ; 57a ; 57b) est formée pour être verrouillable en position d'accoudoir.

12. Agencement de sièges selon l'une des revendications 6 à 11, **caractérisé en ce que** la partie de rembourrage (57) présente un élément de support (59) indéformable, ainsi qu'au moins un bras de levier (79) relié à cet élément, le bras de levier (79) pivotant dans un support de palier (80) de la plaque de support (56) entre la position de table et la position d'accoudoir et étant formé pour être verrouillable dans ces deux positions.

13. Agencement de sièges selon l'une des revendications 1 à 12, **caractérisé en ce que**, lors du passage des parties de rembourrage (57, 57a, 57b) en position d'accoudoir, un espace libre est formé pour le déplacement d'au moins un siège (2, 4) de la rangée de sièges (1) transversalement par rapport à la direction des sièges.
